Europäisches Patentamt

(19) European Patent Office (11) Numéro de publication: **0 007 278**

Office européen des brevets **B1**

(12) # FASCICULE DE BREVET EUROPEEN

(45) Date de publication du fascicule de brevet: **04.11.81** (51) Int. Cl.³: **B 60 T 11/20** //B60T17/22

(21) Numéro de dépôt: **79400483.8**

(22) Date de dépôt: **10.07.79**

(54) Maître-cylindre tandem.

(30) Priorité: **12.07.78 FR 7820817**

(43) Date de publication de la demande:
**23.01.80 Bulletin 80/2**

(45) Mention de la délivrance du brevet:
**04.11.81 Bulletin 81/44**

(84) Etats Contractants Désignés:
**DE GB IT SE**

(56) Documents cités:
**DE - A - 1 780 416**
**DE - A - 2 426 294**
**FR - A - 1 555 573**
**FR - A - 2 005 266**

(73) Titulaire: **SOCIETE ANONYME D.B.A.**
**98 boulevard Victor Hugo**
**F-92115 Clichy (FR)**

(72) Inventeur: **Carré, Jean-Jacques**
**100 Avenue du Président Wilson**
**F-93100 Montreuil (FR)**
Inventeur: **Chéron, Jean-Marc**
**7 rue Maincourt Résidence la Pommeraie**
**F-77230 Longperrier (FR)**

(74) Mandataire: **Brullé, Jean et al,**
**Service Brevets Bendix 44, rue François 1er**
**F-75008 Paris (FR)**

Courier Press, Leamington Spa, England.

## Maître-cylindre tandem

La présente invention concerne un maître-cylindre à deux circuits tels que ceux qui sont utilisés dans les installations de freinage d'un véhicule automobile.

On connaît de tels maître-cylindres soit à alésages et pistons séparés disposés parallèlement soit à deux pistons alignés montés en tandem dans un même alésage.

En cas de défaillance de l'un des deux circuits, le grave inconvénient de ces systèmes est que la pédale de frein doit effectuer en pure perte une partie de sa course correspondant à l'annulation du volume de la chambre du circuit défaillant, course perdue durant laquelle aucun freinage ne peut intervenir dans le circuit intact et durant laquelle le conducteur subit un effet qualifié de "paralysant" en raison du manque de réaction de la pédale.

Cette perte de course a pu être réduite par l'utilisation d'une chambre d'équilibrage annexe comme décrit dans le brevet français 2 005 266 où la course perdue correspond à l'annulation du volume d'une chambre annexe de dimensions sensiblement plus faibles que l'une ou l'autre des chambres principales du maître-cylindre.

On remarque toutefois qu'il subsiste une perte de course même si cette dernière a été réduite. Or, comme on le sait, l'accoutumance d'un conducteur aux réactions normales de son véhicule est telle que le moindre changement de ces réactions ne peut manquer de le troubler.

La présente invention a donc essentiellement pour objet un maître-cylindre tandem dans lequel deux pistons associés rigidement entre eux et à une tige de commande compriment le liquide de freinage dans deux volumes correspondants, destinés à être reliés respectivement aux cylindres de roues avant et arrière d'un véhicule automobile d'une part, et reliés à un dispositif équilibreur d'autre part, des conduits hydrauliques reliant les volumes de maître-cylindre aux chambres définies dans un boîtier du dispositif équilibreur de part et d'autre d'un plongeur éventuellement associé à un indicateur de déséquilibre de pression, caractérisé en ce que dans au moins un desdits conduits hydrauliques est prévue un étranglement freinant l'écoulement du liquide de frein.

On conçoit que, grâce à une telle disposition, à savoir l'insertion d'un étranglement dans au moins un des conduits de liaison entre maître-cylindre et dispositif équilibreur, en cas de défaillance de l'un des deux circuits de freinage, le passage de fluide sera freiné par l'étranglement et il en résultera l'apparition d'une pression de réaction momentanée dans le circuit non affecté permettant à la fois l'actionnement immédiat des freins et l'obtention d'une sensation correspondante pour le conducteur.

Selon une autre caractéristique de l'invention, l'étranglement précité est ménagé dans un bouchon axialement déplaçable par rapport au boîtier du dispositif équilibreur, ledit bouchon pouvant être positionné de sorte que ledit étranglement soit en regard du conduit de liaison avec le volume correspondant du maître-cylindre, le retrait axial dudit bouchon en éloignement par rapport au plongeur permettant de démasquer ledit conduit lors de la purge du maître-cylindre. On conçoit que le découvrement du conduit de liaison facilite la purge du système.

La présente invention sera maintenant décrite à titre d'exemple en se référant aux dessins annexés dans lesquels:

— la figure 1 représente une coupe longitudinale d'un maître-cylindre tandem et du système équilibreur qui lui est associé selon l'invention, en position de repos;

— la figure 2 représente en coupe la position du système équilibreur lors d'une action de freinage normal;

— la figure 3 représente en coupe la position du système équilibreur en cas de défaillance d'un des circuits; et

— la figure 4 représente en coupe la position du système équilibreur en case de défaillance de l'autre des circuits.

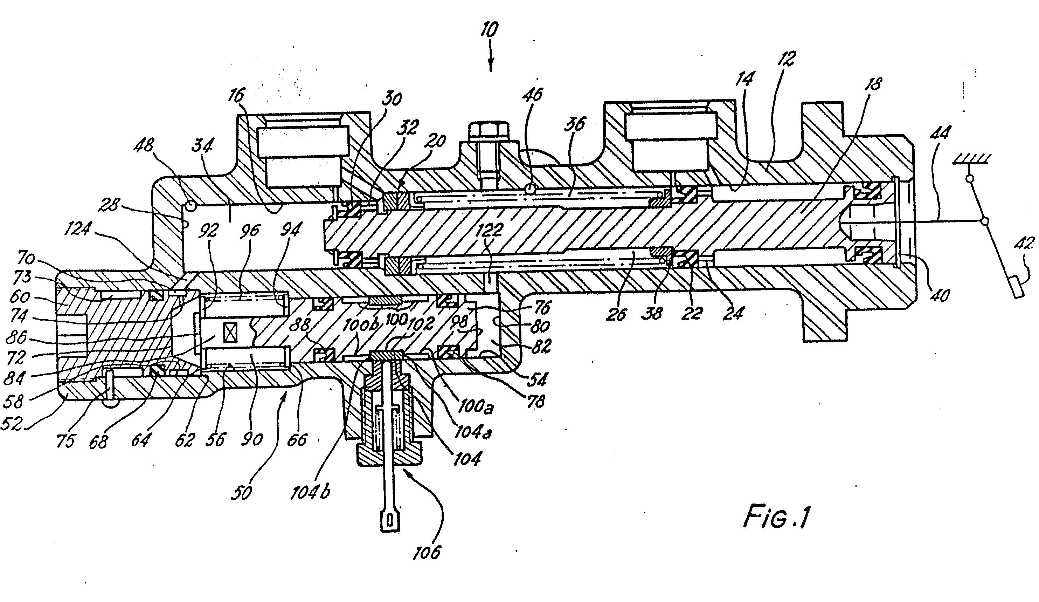

Si on se reporte à la figure 1, un maître-cylindre tandem désigné par la référence générale 10 est constitué d'un boîtier 12 percé de deux alésages coaxiaux 14 et 16. Dans le boîtier 12 est monté coulissant un piston étagé 18. Le piston 18, un ensemble de joints de butée 20, l'alésage 14 et un joint d'étanchéité 22 plaqué contre un épaulement 24 du piston 18 délimitent une première chambre 26. Le piston 18, le fond 28 du boîtier 12, l'alésage 16 et un joint 30 plaqué contre un épaulement 32 du piston 18 délimitent une seconde chambre 34. Un ressort 36, monté entre l'ensemble de joints de butée 20 et un épaulement 38 solidaire du piston 18, rappelle ce dernier en appui sur un arrêt 40 solidaire du boîtier 12. Une pédale 42, associée à une bielle 44, est susceptible de déplacer le piston 18 à l'encontre de la force du ressort 36 lors d'une action du conducteur. La chambre 26 communique, au moyen d'un orifice 46, avec un circuit de distribution desservant des moteurs de frein associés aux roues avant du véhicule automobile, non représentés. La chambre 34 communique, au moyen d'un orifice 48, avec un circuit de distribution desservant des moteurs de frein associés aux roues arrière dudit véhicule, également non représentés. Les dimensions du piston 18 et des alésages 14 et 16 sont telles qu'à tout déplacement du piston 18 correspond une variation identique du volume des chambres 26 et 34.

Au maître-cylindre tandem 10 est associé un système équilibreur désigné par la référence 50.

Le système équilibreur comprend un boîtier 52. Ce boîtier est percé de trois alésage coaxiaux 54, 56 et 58 et son extrémité gauche est taraudée pour recevoir un bouchon fileté 60. Le bouchon 60 vient s'appliquer de manière étanche contre l'épaulement 62 séparant les alésages 56 et 58 et définit lui-même un épaulement rentrant 64 en regard de l'épaulement 66 séparant les alésages 54 et 56. La périphérie du bouchon 60, l'alésage 58 et un joint 68 définissent une chambre annulaire 70, soit au moyen d'un jeu approprié soit au moyen d'une gorge annulaire dans le bouchon 60 ou dans les boîtier 52. Le bouchon 60 est évidé sur sa face interne 72 et un perçage de faible diamètre 74 met en communication la chambre annulaire 70 et l'intérieur de l'évidement. De plus, une gorge annulaire 73 est ménagée à la périphérie du bouchon 60 et un têton 75 introduit dans un perçage du boîtier vient s'engager dans la gorge 73, limitant le déplacement axial du bouchon 60 lors du dévissage pour des raisons qui seront données plus loin. Un piston 76 est monté coulissant dans l'alésage 54. Le piston 76, un joint 78, l'alésage 54 et le fond 80 du boîtier 52 définissent une première chambre 82. Face au bouchon 60, le piston 76 comporte un prolongement 84 de diamètre inférieur et coaxial au piston 76. Ce prolongement 84 se termine par une bride 86. Le bouchon 60, l'alésage 56, le piston 76 et son prolongement 84, et un joint 88 définissent une seconde chambre 90. Sur le prolongement 84 sont montées deux rondelles 92 et 94 coulissant intérieurement le long du prolongement et extérieurement le long de l'alésage 56. Entre les rondelles 92 et 94 est placé un ressort de compression 96. La longueur du prolongement entre le corps du piston 76 et la bride 86 étant égale à la distance qui sépare les épaulements 64 et 66, le piston se place donc au repos dans la position où il est représenté à la figure 1, la rondelle 92 en appui sur l'épaulement 64 et sur la bride 86, la rondelle 94 en appui sur l'épaulement 66 et le corps du piston 76. A partir de cette position de repos, le piston peur se déplacer vers la droite en comprimant le ressort 96 par l'intermédiaire de la rondelle 92 jusqu'à une position limite où l'extrémité droite 98 du piston 76 vient buter sur le fond 80 du boîtier 52, ou vers la gauche en comprimant le même ressort 96 par l'intermédiaire de la rondelle 94 jusqu'à une position limite où la bride vient buter sur le fond 72 du bouchon 60. Les dimensions des divers éléments étant choisies pour que les amplitudes des deux courses, vers la droite ou vers la gauche, répondent à des critères prédéterminés, identiques dans l'exemple choisi.

La partie centrale du piston 76 présente une première gorge annulaire 100 et la partie centrale de la gorge 100 présente une deuxième gorge annulaire 102 dans laquelle est montée une bague 104 en matériau isolant de diamètre extérieur sensiblement supérieur au diamètre de la gorge 100. La bague 104 présente deux épaulements 104a et 104b qui séparent la gorge 100 en deux gorges 100a et 100b. La longueur dans le sens axial de la bague 104 est égale à la course totale du piston.

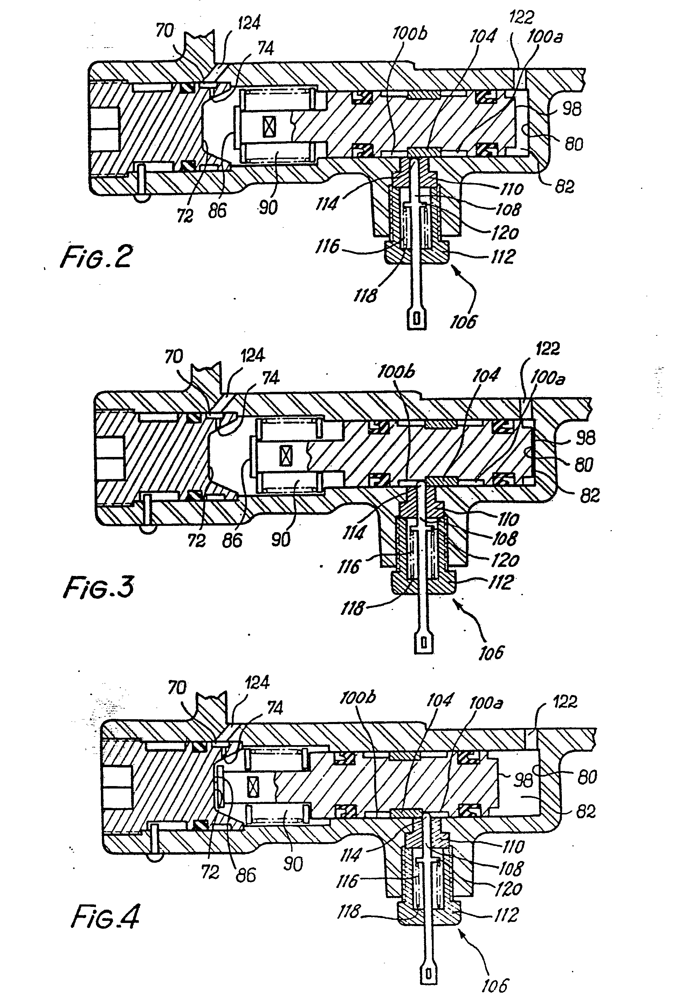

Face à la bague 104 est représenté un contact bloqueur désigné par la référence 106, mieux décrit à la figure 2. Le contact bloqueur 106 comprend un doigt 108 en matériau conducteur coulissant dans un guide 110 et un bouchon 112, tous deux en matériau isolant. L'extrémité 114 du doigt 108, de forme arrondie, est appliquée sur la bague isolante 104 au moyen d'un ressort de compression 116 prenant appui d'une part sur le fond 118 du bouchon 112 et d'autre part sur un épaulement 120 du doigt 108. Au repos l'extrémité 114 se trouve, par rapport à la bague 104, dans le sense axial, dans une position telle que la course maximum du piston vers la droite amène cette extrémité à s'engager dans la demi-gorge 100b et que la course maximum du piston vers la gauche l'amène à s'engager dans le demi-gorge 100a. Dans l'exemple choisi, au repos, l'extrémité 114 est au milieu de la bague 104.

· La chambre 26 est reliée à la chambre 82 au moyen d'un orifice 122 et la chambre 34 est reliée à l'espace annulaire 70 au moyen d'un orifice 124 (figure 1). L'orifice 74 a une section faible, comparée à la section de l'un ou l'autre des orifices 122 et 124.

Le fonctionnement du maître-cylindre selon l'invention va maintenant être décrit:

La figure 1 montre l'ensemble à l'état de repos, le piston 18 en appui contre la bague 40 au moyen du ressort 36 et la piston 76 étant en position telle que l'extrémité 114 du doigt 108 vient s'appliquer au milieu, dans le sens axial, de la bague 104.

L'effort de freinage appliqué à la pédale 42 est transmis au piston 18, dont il provoque le déplacement vers la gauche si l'on considère la figure 1. Le liquide comprimé dans la chambre 26 par le piston 18 est transmis aux moteurs de frein avant à travers l'orifice 46 et le liquide comprimé dans la chambre 34 par le piston 18 est transmis aux moteurs de freins arrière à travers l'orifice 48. Le même volume de fluide étant transmis auxdits circuits avant et arrière, il règne la même pression dans les chambres 26 et 34 par conséquent dans les chambres 82 et 90 grâce aux passages 122 et 124, 70, 74 respectivement. Le piston 76 reste alors dans la position dans laquelle il est montré à la figure 1.

Pour diverses raisons: tolérances d'usinage, absorbtion différente des conduits flexibles des circuits hydrauliques, courses différentes des pistons de freins, légères fuites, usure, les pressions régnant dans les chambres 26 et 34 peuvent être légèrement différentes. Cette différence se retrouve au niveau des chambres 82 et 90 et provoque le déplacement du piston 76 dans un sens qui tend à annuler cette différence de pression. On a illustré une telle situation à la figure 2, dans laquelle la pression la plus forte est celle qui règne dans la chambre 34. Tant que cette différence de pression reste faible, le déplacement du piston 76 est limité et le comportement du système ne subit pas de modification.

Le fonctionnement en cas de défaillance de l'un ou l'autre des deux circuits est illustré aux figures 3 et 4.

Si le circuit avant est défaillant (figure 3), lors de l'application d'une force de freinage sur la pédale 42, la pression reste nulle dans la chambre 26 et par conséquent dans la chambre 82. La pression créée dans la chambre 34 se transmet à la chambre 90 et provoque le déplacement du piston 76 jusqu'à amener l'extrémité 98 en butée sur le fond 80 du boîtier 52. Cette pression reste donc faible durant toute la course du piston 76. Lorsque ce dernier arrive en butée, la pression dans la chambre 34 peut alors croître et actionner les moteurs de freins arrière. On constate qu'il résulte de l'absence de pression dans la chambre 26 une application de la totalité de l'effort de freinage au fluide contenu dans la chambre 34 et par conséquent aux moteurs de frein arrière dont la capacité de freinage se trouve pratiquement doublée.

La course de la pédale 42 nécessaire pour amener le piston 76 en butée est généralement perdue dans les systèmes similaires connus, lesquels présentent deux inconvénients graves:

— aucun freinage ne peut intervenir durant cette course perdue;

— l'absence de réaction du système provoque un trouble psychologique chez le conducteur qui ne sait pas ou a oublié qu'il faut poursuivre l'enfoncement de la pédale pour obtenir le freinage du véhicule.

La présente invention permet d'éviter ces deux inconvénients grâce au processus suivant: le liquide qui s'écoule vers la chambre 90 à cause de la défaillance du circuit avant est contraint d'emprunter un orifice 74 de faible section dit par la suite "étranglement" qui ralentit considérablement sa vitesse de passage. Il s'ensuit qu'une certaine pression s'établit dans la chambre 34 dès le début de la course de la pédale 42, cette pression ayant deux effets: délivrer aux moteurs de frein arrière une pression suffisante pour commencer leur mise en oeuvre et transmettre au mécanisme une réaction indiquant an conducteur que son action est suivie d'effet.

A la figure 4 est illustré le fonctionnement dans le cas où le circuit arrière est défaillant. L'apparition d'une pression dans la chambre 26 provoque l'écoulement du liquide contenu dans la chambre 90 vers la chambre 34 où règne une pression nulle, l'étranglement 74 ralentissant ce passage du fluide de la chambre 90 vers la chambre 34 et permettant l'établissement d'une pression de freinage dans le circuit avant et d'une réaction vers la pédale 42 et le conducteur.

A titre complémentaire, dans les deux cas, on remarquera que lorsque le piston 76 arrive en fin de course, l'extrémité 114 du doigt 108 quitte la bague isolante 104 et vient s'appliquer sur le corps du piston 76 dans l'une des deux gorges 100a (figure 4) ou 100b (figure 3). On a donc ainsi un contact électrique permettant de signaler la défaillance de l'un des deux circuits.

Autre caractéristique importante, l'extrémité 114 du doigt 108 venant s'engager dans l'une des deux gorges 100a ou 100b se trouve également en engagement avec l'un des deux épaulements 104a ou 104b, respectivement, de la bague isolante, ce qui a pour effet d'empêcher le retour du piston 76 dans sa position de départ et de le maintenir en position de déséquilibre. Le piston ayant été déplacé jusqu'à l'une de ses deux positions de butée lors du premier freinage, ce déplacement n'interviendra plus lors des freinages ultérieurs qui procureront un freinage utile dès le début de la course de la pédale 42.

Lorsque la défaillance constatée aura été réparée, il suffira alors de tirer sur le doigt 108 pour le dégager de la gorge 100a ou 100b où son extrémité 114 s'est logée et libérer le piston 76 qui sera automatiquement recentré par le ressort 96.

Enfin, il y a lieu de noter que la chambre 90 peut être purgée, soit lors de la mise en service, soit lors d'une réparation, en dévissant le bouchon 60 jusqu'à une position limite définie par le têton 75. Le déplacement axial lors du dévissage permettant la mise en communication directe de la chambre 90 avec la chambre 34 au travers du passage 124. Cette purge effectuée, le bouchon 60 est revissé jusqu'à la position où il est représenté à la figure 1. On conçoit qu'en l'absence d'une telle disposition, la purge de la chambre 90 au travers de l'étranglement 74 serait particulièrement difficile.

**Revendications**

1. Maître-cylindre tandem dans lequel deux pistons (18) associés rigidement entre eux et à une tige de commande (44) compriment le liquide de freinage dans deux volumes correspondants (26), (34), destinés à être reliés respectivement aux cylindres de roues avant et arrière d'un véhicule automobile d'une part, et reliés à un dispositif équilibreur (50) d'autre part, des conduits hydrauliques (122), (124), (74) reliant les volumes (26, 34) du maître cylindre aux chambres (82, 90) définies dans un boîtier (52) du dispositif équilibreur (50) de part et d'autre d'un plongeur (76) éventuellement associé à un indicateur de déséquilibre de pression (106), caractérisé en ce que dans au moins un desdits conduits hydrauliques (124, 74) est prévu un étranglement (74) freinant l'écoulement du liquide de frein.

2. Maître-cylindre tandem selon la revendication 1, caractérisé en ce que l'étranglement (74) précité est ménagé dans un bouchon (60) axialement déplaçable par rapport au boîtier (52) du dispositif équilibreur (50), ledit bouchon (60) pouvant être positionné de sorte que ledit étranglement (74) soit en regard du conduit de liaison (124) avec le volume correspondant (34) du maître-cylindre, le retrait axial dudit bouchon (60) en éloignement par rapport au plongeur (76) permettant de démasquer ledit conduit (124) lors de la purge du maître-cylindre.

3. Maître-cylindre tandem selon la revendication 2, caractérise en ce qu'il est prévu une butée (75) limitant le retrait axial dudit bouchon (60) à la distance nécessaire pour permettre de démasquer ledit conduit (124).

**Patentansprüche**

1. Tandem-Hauptbremszylinder mit zwei stark gekoppelten Kolben (18) und mit einer Betätigungsstange (44), durch welche Bremsflüssigkeit unter Druck in zwei entsprechenden Kammern (26, 34) einspeisbar ist, die mit den Radbremszylindern für die Vorderräder bzw. die Hinterräder eines Kraftfahrzeuges und einem Bremsdruckausgleicher (50) verbindbar sind, wobei durch Hydraulikleitungen (122, 124, 74) die Kammern (26, 34) des Hauptbremszylinders mit denjenigen Kammern (82, 90) eines Gehäuses (52) des Bremsdruckausgleicher (50) verbunden sind, die im Gehäuse (52) des letzteren zu beiden Seiten des Ausgleicher kolbens (76) ausgebildet sind, welch letzterem gegebenenfalls eine Anzeigeeinrichtung (106) für ungleiche Druckverhältnisse zugeordnet ist, dadurch gekennzeichnet, daß zumindest eine der Hydraulikleitungen (124, 74) mit einer Drosselstelle (74) versehen ist, durch welche der Bremsflüssigkeitsstrom verlangsamt wird.

2. Tandem-Hauptsbremszylinder nach Anspruch 1, dadurch gekennzeichnet, daß die Drosselstelle (74) in einem Stopfen (60) ausgebildet ist, welcher bezüglich des Gehäuses (52) des Bremsdruckausgleicher (50) in axialer Richtung verlagerbar ist und welcher in seiner Lage so einstellbar ist, daß die Drosselstelle vor der Verbindungsleitung (124) zur entsprechenden Kammer (34) des Hauptbremszylinders liegt, wobei die Größe der axialen Abhebbewegung des Stopfens (60) vom Ausgleicherkolben (76) so groß ist, daß die genannte Verbindungsleitung (124) freigegeben wird, wenn der Hauptbremszylinder entlüftet wird.

3. Tandem-Hauptbremszylinder nach Anspruch 2, dadurch gekennzeichnet, daß er einen Anschlag (75) aufweist, welcher die axiale Rückstellbewegung des Stopfens (60) auf diejenige Strecke begrenzt, die zum Freigeben der genannten Verbindungsleitung (124) notwendig ist.

**Claims**

1. A tandem master cylinder wherein two pistons (18) rigidly associated with one another and with a control rod (44) compress the brake fluid into two corresponding cavities (26, 34) provided to be connected to the cylinders of the front wheel and back wheel respectively of a motor vehicle on one hand and connected to an equalizer device (50) on the other hand, hydraulic ducts (122, 124, 74) connecting the cavities (26, 34) of the master cylinder to the chambers (82, 90) defined in a casing (52) of the equalizer device (50) on either side of a plunger (76), which if required is associated with a pressure unbalance indicator (106), characterised in that at least one of the hydraulic ducts (124, 74) is formed with a constriction (74) slowing down the flow of brake fluid.

2. A tandem master cylinder according to claim 1, characterized in that the aforementioned constriction (74) is formed in a plug (60) axially movable relative to the casing (52) of the equalizer device (50), the plug (60) being positionable so that the constriction (74) is opposite the connecting duct (124) to the corresponding cavity (34) in the master cylinder, the axial movement of the plug (60) away from the plunger (76) permitting to uncover the duct (124) when the master cylinder is drained.

3. A tandem master cylinder according to claim 2, characterized in that it comprises an abutment (75) limiting the axial movement of the plug (60) to the distance required for uncovering the duct (124).

*Fig.1*

0 007 278

Fig.2

Fig.3

Fig.4